# EUROPEAN PATENT SPECIFICATION

(11) **EP 4 270 137 B1**
(45) Date of publication and mention of the grant of the patent: **31.12.2025**
(21) Application number: 23169075.1
(22) Date of filing: 20.04.2023
(51) Int. Cl.: G05D 1/00

(54) **CREATION OF A VIRTUAL BOUNDARY FOR A ROBOTIC GARDEN TOOL**
ERZEUGUNG EINER VIRTUELLEN GRENZE FÜR EIN ROBOTISCHES GARTENWERKZEUG
CRÉATION D'UNE LIMITE VIRTUELLE POUR UN OUTIL DE JARDIN ROBOTISÉ

(30) Priority: 28.04.2022 US 202263335933 P
(43) Date of publication of application: 01.11.2023
(73) Proprietor: Techtronic Cordless GP, Anderson, SC 29621 (US)
(72) Inventor: LEE, Hei Man, Kwai Chung (HK); CHOI, Man Ho, Kwai Chung (HK); LI, Shing Hin, Kwai Chung (HK); LAI, Hok Sum Sam, Kwai Chung (HK); NG, Ho Lam, Kwai Chung (HK)
(74) Representative: Zimmermann & Partner Patentanwälte mbB

(56) References cited:
- WO-A1-2021/058030
- CN-B- 108 226 965
- US-A1- 2020 275 604

## Description

### RELATED APPLICATIONS

This application claims priority to U.S. Provisional Application No. 63/335,933, filed on April 28, 2022 (Attorney Docket No.: 206737-9053-US01).

### FIELD

The present disclosure relates to robotic garden tools, particularly to methods and systems for creating one or more virtual boundaries for a robotic garden tool within an operating area. Document US 2020/275604 A1 relates to an intelligent mowing system. Document CN 108 226 965 B relates to a positioning fault processing method of self-moving equipment, device and electronic equipment.

### SUMMARY

One embodiment includes a communication system that may include a robotic garden tool and an external device. The robotic garden tool may include a housing, and a set of wheels coupled to the housing and configured to rotate to propel the robotic garden tool on an operating surface in an operating area. The robotic garden tool may also include at least one wheel motor coupled to one or more wheels of the set of wheels. The at least one wheel motor may be configured to drive rotation of the one or more wheels. The robotic garden tool may also include a first electronic processor that may be configured to receive a first location signal from a satellite. The first electronic processor may also be configured to transmit calibration information regarding the first location signal to an external device. The robotic garden tool may be configured to remain stationary to act as a first base station with respect to the external device during creation of a virtual boundary by the external device. The robotic garden tool may be configured to be confined by the virtual boundary to remain in the operating area during operation of the robotic garden tool. The external device may include a second electronic processor that may be configured to receive the first location signal from the satellite. The second electronic processor may also be configured to receive the calibration information from the robotic garden tool. The second electronic processor may also be configured to determine a plurality of locations of the external device, based on (i) the first location signal received by the second electronic processor from the satellite and (ii) the calibration information from the robotic garden tool, as the external device is moved in the operating area during the creation of the virtual boundary. The second electronic processor may also be configured to store the plurality of locations of the external device as waypoints. The virtual boundary may be generated using the waypoints. The external device may be configured to be hand-held by a user while being moved in the operating area during the creation of the virtual boundary.

In addition to any combination of features described above, the external device may be configured to be placed in a stationary manner at a base station location after the creation of the virtual boundary and may be configured to remain stationary to act as a second base station with respect to the robotic garden tool during operation of the robotic garden tool as the robotic garden tool moves on the operating surface in the operating area.

In addition to any combination of features described above, the second electronic processor of the external device may be configured such that during operation of the robotic garden tool as the robotic garden tool moves on the operating surface in the operating area, the second electronic processor may (I) receive a second location signal from the satellite, and (II) transmit second calibration information regarding the second location signal to the robotic garden tool. The first electronic processor of the robotic garden tool may be configured such that during operation of the robotic garden tool as the robotic garden tool moves on the operating surface in the operating area, the first electronic processor may one or more of (I) receive the second location signal from the satellite, (II) receive the second calibration information from the external device, (III) determine a current location of the robotic garden tool based on (i) the second location signal received by the first electronic processor from the satellite and (ii) the second calibration information from the external device, and (IV) control operation of the at least one wheel motor to control movement of the robotic garden tool based on the current location of the robotic garden tool and the virtual boundary.

In addition to any combination of features described above, the first electronic processor may be configured to receive the first location signal via a first real-time kinematic global navigating satellite systems (RTK GNSS) receiver of the robotic garden tool. The first electronic processor may be configured to transmit the calibration information via a first radio frequency transceiver of the robotic garden tool. The second electronic processor may be configured to receive the first location signal via a second RTK GNSS receiver of the external device. The second electronic processor may be configured to receive the calibration information via a second radio frequency transceiver of the external device.

In addition to any combination of features described above, the first electronic processor may be configured to receive the first location signal via a first global positioning system (GPS) receiver of the robotic garden tool. The second electronic processor may be configured to receive the first location signal via a second GPS receiver of the external device. The first GPS receiver and the second GPS receiver may be different types of GPS receivers such that one of the first GPS receiver and the second GPS receiver allows for more accurate positioning determinations than the other.

In addition to any combination of features described above, the calibration information may include first phase information of the first location signal received by the robotic garden tool. The second electronic processor may be configured to compare the first phase information to second phase information of the first location signal received by the external device to aid in determining the plurality of locations of the external device.

In addition to any combination of features described above, the external device may include a user input device configured to be actuated by the user. The second electronic processor may be configured to store a current location of the external device as one of the waypoints in response to determining that the user input device has been actuated.

Another embodiment includes a method of creating a virtual boundary. The method may include receiving, with a first electronic processor of a robotic garden tool, a first location signal from a satellite. The robotic garden tool may include a housing, and a set of wheels coupled to the housing and configured to rotate to propel the robotic garden tool on an operating surface in an operating area. The robotic garden tool may also include at least one wheel motor coupled to one or more wheels of the set of wheels. The at least one wheel motor may be configured to drive rotation of the one or more wheels. The method may further include transmitting, with the first electronic processor, calibration information regarding the first location signal to an external device. The robotic garden tool may be configured to remain stationary to act as a first base station with respect to the external device during creation of the virtual boundary by the external device. The robotic garden tool may be configured to be confined by the virtual boundary to remain in the operating area during operation of the robotic garden tool. The method may further include receiving, with a second electronic processor of the external device, the first location signal from the satellite. The method may further include receiving, with the second electronic processor, the calibration information from the robotic garden tool. The method may further include determining, with the second electronic processor, a plurality of locations of the external device, based on (i) the first location signal received by the second electronic processor from the satellite and (ii) the calibration information from the robotic garden tool, as the external device is moved in the operating area during the creation of the virtual boundary. The method may further include storing, with the second electronic processor, the plurality of locations of the external device as waypoints. The method may further include generating the virtual boundary using the waypoints. The external device may be configured to be hand-held by a user while being moved in the operating area during the creation of the virtual boundary.

In addition to any combination of features described above, the method may also include after the creation of the virtual boundary, placing the external device in a stationary manner at a base station location. The external device may be configured to remain stationary to act as a second base station with respect to the robotic garden tool during operation of the robotic garden tool as the robotic garden tool moves on the operating surface in the operating area.

In addition to any combination of features described above, the method may also include during operation of the robotic garden tool as the robotic garden tool moves on the operating surface in the operating area one or more of: (I) receiving, with the second electronic processor of the external device, a second location signal from the satellite, (II) transmitting, with the second electronic processor, second calibration information regarding the second location signal to the robotic garden tool, (III) receiving, with the first electronic processor of the robotic garden tool, the second location signal from the satellite, (IV) receiving, with the first electronic processor, the second calibration information from the external device, (V) determining, with the first electronic processor, a current location of the robotic garden tool based on (i) the second location signal received by the first electronic processor from the satellite and (ii) the second calibration information from the external device, and (VI) controlling, with the first electronic processor, operation of the at least one wheel motor to control movement of the robotic garden tool based on the current location of the robotic garden tool and the virtual boundary.

In addition to any combination of features described above, receiving, with the first electronic processor of the robotic garden tool, the first location signal may include receiving the first location signal via a first real-time kinematic global navigating satellite systems (RTK GNSS) receiver of the robotic garden tool. In some instances, transmitting the calibration information may include transmitting the calibration information via a first radio frequency transceiver of the robotic garden tool. In some instances, receiving, with the second electronic processor of the external device, the first location may include receiving the first location signal via a second RTK GNSS receiver of the external device. In some instances, receiving the calibration information may include receiving the calibration information via a second radio frequency transceiver of the external device.

In addition to any combination of features described above, receiving, with the first electronic processor of the robotic garden tool, the first location signal may include receiving the first location signal via a first global positioning system (GPS) receiver of the robotic garden tool. In some instances, receiving, with the second electronic processor of the external device, the first location includes receiving the first location signal via a second GPS receiver of the external device. The first GPS receiver and the second GPS receiver may be different types of GPS receivers such that one of the first GPS receiver and the second GPS receiver allows for more accurate positioning determinations than the other.

In addition to any combination of features described above, the calibration information may include first phase information of the first location signal received by the robotic garden tool. The method may also include comparing, with the second electronic processor of the external device, the first phase information to second phase information of the first location signal received by the external device to aid in determining the plurality of locations of the external device.

In addition to any combination of features described above, the method may also include determining, with the second electronic processor of the external device, that a user input device of the external device has been actuated by the user. The method may also include in response to determining that the user input device has been actuated, storing a current location of the external device as one of the waypoints.

Another embodiment includes a robotic garden tool that may include a housing, and a set of wheels coupled to the housing and configured to rotate to propel the robotic garden tool on an operating surface in an operating area. The robotic garden tool may also include at least one wheel motor coupled to one or more wheels of the set of wheels. The at least one wheel motor may be configured to drive rotation of the one or more wheels. The robotic garden tool may also include a first electronic processor that may be configured to receive a first location signal from a satellite. The first electronic processor may be further configured to transmit calibration information regarding the first location signal to an external device. The robotic garden tool may be configured to remain stationary to act as a first real-time kinematic global navigating satellite systems (RTK GNSS) base station with respect to the external device during creation of a virtual boundary by the external device as the external device is moved in the operating area. The robotic garden tool may be configured to be confined by the virtual boundary to remain in the operating area during operation of the robotic garden tool.

In addition to any combination of features described above, the calibration information may be configured to be used by a second electronic processor of the external device to (i) determine a plurality of locations of the external device as the external device is moved in the operating area during the creation of the virtual boundary, and (ii) store the plurality of locations of the external device as waypoints. The virtual boundary may be generated using the waypoints. The external device may be configured to be hand-held by a user while being moved in the operating area during the creation of the virtual boundary.

In addition to any combination of features described above, the robotic garden tool is configured to move on the operating surface in the operating area to perform a task after the creation of the virtual boundary. The first electronic processor of the robotic garden tool may be configured such that during operation of the robotic garden tool as the robotic garden tool moves on the operating surface in the operating area, the first electronic processor may one or more of (I) receive a second location signal from the satellite; (II) receive second calibration information from the external device, wherein the external device is configured to be placed in a stationary manner at a base station location after the creation of the virtual boundary and is configured to remain stationary to act as a second RTK GNSS base station with respect to the robotic garden tool during operation of the robotic garden tool as the robotic garden tool moves on the operating surface in the operating area, (III) determine a current location of the robotic garden tool based on (i) the second location signal received by the first electronic processor from the satellite and (ii) the second calibration information from the external device, and (IV) control operation of the at least one wheel motor to control movement of the robotic garden tool based on the current location of the robotic garden tool and the virtual boundary.

In addition to any combination of features described above, the first electronic processor may be configured to receive the first location signal via a first RTK GNSS receiver of the robotic garden tool. The first electronic processor may be configured to transmit the calibration information via a first radio frequency transceiver of the robotic garden tool.

In addition to any combination of features described above, the first electronic processor may be configured to receive the first location signal via a first global positioning system (GPS) receiver of the robotic garden tool. In some instances, a second electronic processor of the external device may be configured to receive the first location signal from the satellite via a second GPS receiver of the external device. The first GPS receiver and the second GPS receiver may be different types of GPS receivers such that one of the first GPS receiver and the second GPS receiver allows for more accurate positioning determinations than the other.

In addition to any combination of features described above, the calibration information may include first phase information of the first location signal received by the robotic garden tool. A second electronic processor of the external device may be configured to compare the first phase information to second phase information of the first location signal received by the external device to aid in determining a location of the external device.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates an example implementation of the communication system of FIG. 1A according to some example embodiments.
FIG. 1C illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the base station device of FIG. 1A according to some example embodiments.
FIG. 5 illustrates a flowchart of a method that may be performed by the robotic garden tool and the base station device of FIG. 1A to create a virtual boundary for the robotic garden tool according to some example embodiments.
FIG. 6 illustrates an example use case of creation of the virtual boundary according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

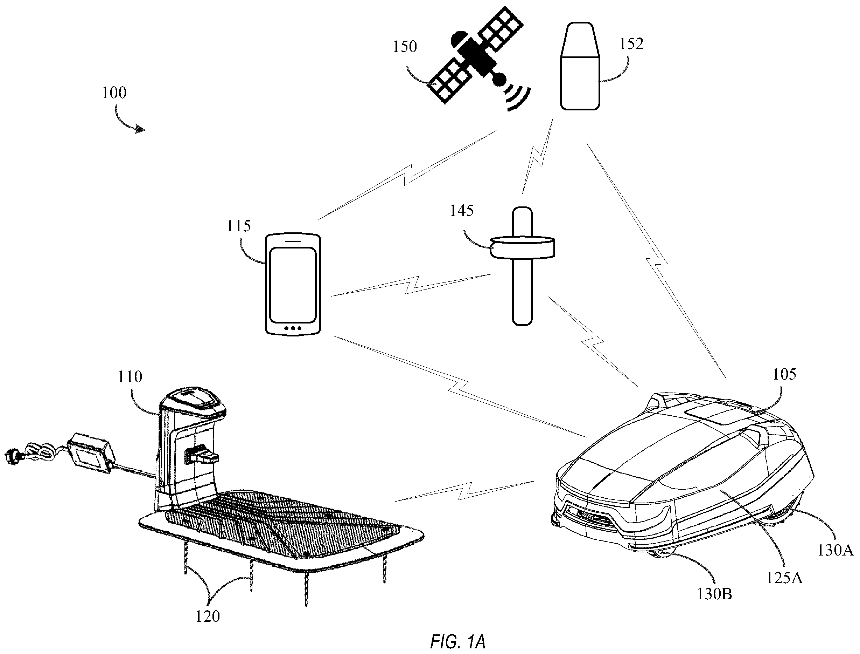

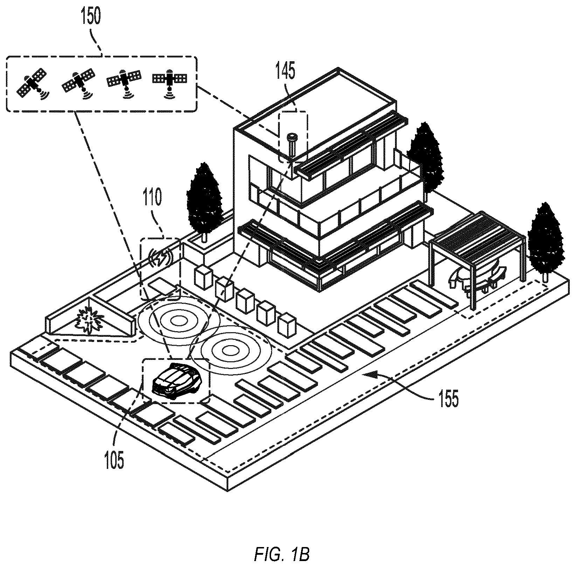

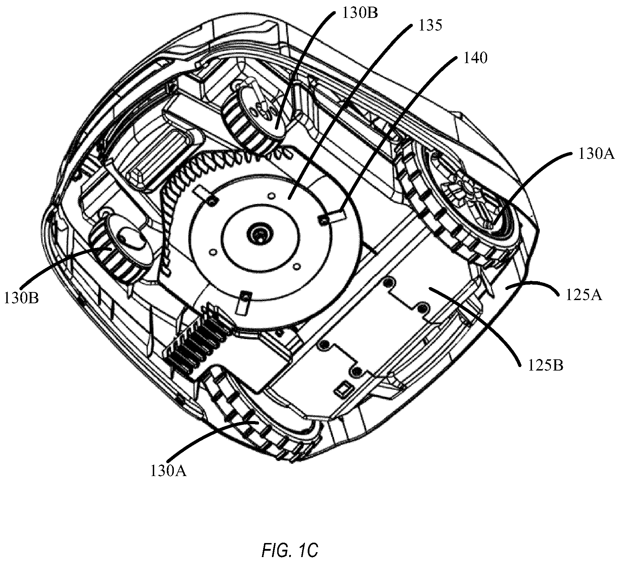

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, a base station device 145, a satellite 150, and a server 152 according to some example embodiments. Two or more devices 105, 110, 115, 145, 150, 152 may make up a communication system 100. The communication system 100 may include more or fewer devices than the amount of devices shown in FIG. 1. For example, the communication system 100 may include additional robotic mowers 105, additional external devices 115, additional base station devices 145 etc. As another example, in some instances, the external device 115, the server 152, and/or the satellite 150 may not be included in the communication system 100 or may not be considered to be a part of the communication system 100. In some of such instances, the communication system 100 may merely be considered to include one or more robotic mowers 105 and one or more base station devices 145 even though these devices 105, 145 may make use of other devices (e.g., the satellite 150). The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal.

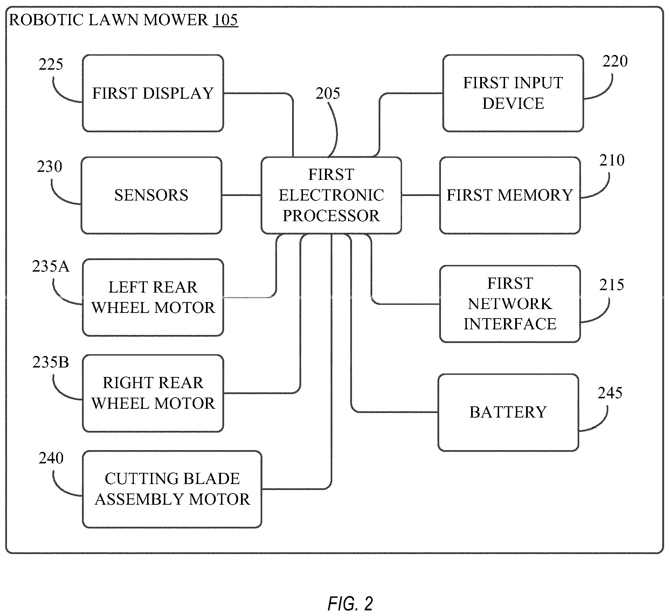

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a yard including grass) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable. In some embodiments, the robotic mower 105 may determine its location (and/or may aid in allowing the base station device 145 and/or the external device 115 to determine their respective locations) by communicating with other devices such as the base station device 145 and/or the satellite 150 as described in detail below. For example, the robotic mower 105 and the base station device 145 may communicate with each other using a radio frequency (RF) communication protocol (e.g., WiFi^{™}, Bluetooth^{™}, Bluetooth^{™} Low Energy (BLE), and/or the like). Creation/generation of a virtual boundary according to some example embodiments is also described in detail below.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

As indicated in FIG. 1A, in some embodiments, the robotic mower 105 is configured to wirelessly communicate with the external device 115 and/or the base station device 145 when the robotic mower 105 is within communication range of the external device 115 and/or the base station device 145 (e.g., via Bluetooth^{™}, WiFi^{™}, or the like). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

In some embodiments, the base station device 145 is considered an external device 115. The base station device 145 may be placed in a stationary manner at a base station location to aid the robotic mower 105 in determining a current location of the robotic mower 105 as the robotic mower 105 moves within an operating area as described in greater detail below. For example, the base station device 145 may be placed on a roof of a building adjacent to an operating area 155 where the robotic mower 105 performs a task (see FIG. 1B). As other examples, the base station device 145 may be located at a different location on a building or at a location within or near the operating area 155 (e.g., at the same location as the charging station 110, on a pole/stake that is inserted into the ground within or near the operating area 155, or the like). While the base station device 145 may be configured to remain stationary during operation of the robotic mower 105 within the operating area 155, in some embodiments, the base station device 145 may be removed from the base station location to define or revise a virtual boundary, to change the base station location when the robotic mower 105 is not operating, and/or the like.

As indicated by FIGS. 1A and 1B, in some embodiments, the robotic mower 105, the external device 115, and/or the base station device 145 are configured to wirelessly and bidirectionally communicate with each other and/or one or more satellites 150 and/or one or more servers 152. For example, the robotic mower 105, the external device 115, and/or the base station device 145 may include a global positioning system (GPS) receiver configured to communicate with one or more satellites 150 to determine a location of the respective robotic mower 105, the external device 115, and/or the base station device 145. As another example, the robotic mower 105, external device 115, and/or base station device 145 may transmit information to and/or receive information from the server 152, for example, over a cellular network. Additional details of communication between (i) the robotic mower 105, the external device 115, and/or the base station device 145 and (ii) the one or more satellites 150 and/or the one or more servers 152 are described below. While FIG. 1A illustrates one satellite 150 and one server 152, in some embodiments, the communication system 100 includes additional satellites 150 and/or servers 152. In some embodiments, the communication system 100 may not include any servers 152.

FIG. 1C illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the base station device 145, the satellite 150, and/or the server 152). In some embodiments, the first network interface 215 includes one or more transceivers for wirelessly communicating with the external device 115, the docking station 110, and/or the base station device 145 (e.g., a first RF transceiver configured to communicate via Bluetooth^{™}, WiFi^{™}, or the like). The first network interface 215 may include an additional transceiver for wirelessly communicating with the server 152 via, for example, cellular communication. The first network interface 215 may also include a first GPS receiver (e.g., a first real-time kinematic global navigating satellite systems (RTK GNSS) receiver) configured to receive a location signal from one or more satellites 150. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, the first network interface 215, and/or the like.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

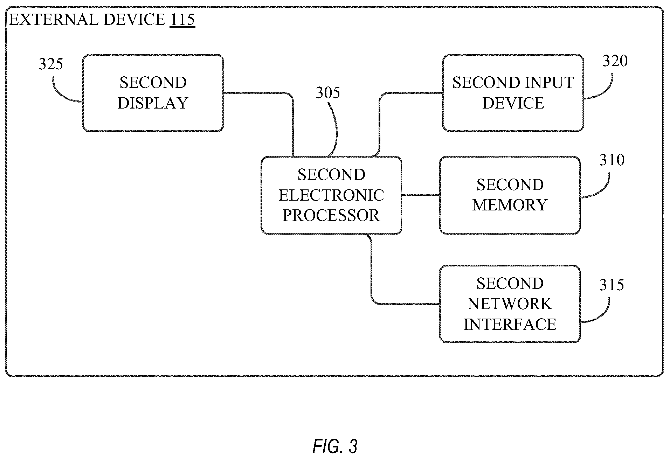

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver (e.g., a second RTK GNSS receiver) configured to receive a location signal from one or more satellites 150. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some embodiments, the external device 115 includes fewer or additional components in configurations different from that illustrated in FIG. 3. For example, the external device 115 may include a battery, a camera, or the like. In some embodiments, the external device 115 performs functionality other than the functionality described below.

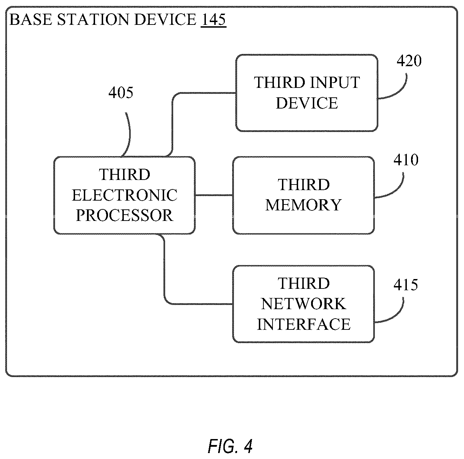

FIG. 4 is a block diagram of the base station device 145 according to some example embodiments. In the example shown, the base station device 145 includes a third electronic processor 405 electrically connected to a third memory 410, a third network interface 415, and a third user input device 420. These components are similar to the like-named components of the robotic mower 105 explained above with respect to FIG. 2 and function in a similar manner as described above. In some embodiments, the third network interface 415 includes one or more transceivers for wirelessly communicating information (e.g., calibration information) to the robotic mower 105 (e.g., a third RF transceiver configured to communicate via Bluetooth^{™}, WiFi^{™}, or the like) to aid the robotic mower 105 in determining a current location of the robotic mower 105 during a mowing operation as explained in greater detail below. The third network interface 415 may include an additional transceiver for wirelessly communicating with the server 152 via, for example, cellular communication. The third network interface 415 may also include a third GPS receiver (e.g., a third RTK GNSS receiver) configured to receive a location signal from one or more satellites 150. In some embodiments, at least some of the transceivers and/or receivers of the base station device 145 may be combined or share some elements (e.g., an antenna and/or other hardware). In some embodiments, the third electronic processor 405 sends data to and receives data from the robotic mower 105 and/or other devices of the communication system 100 via the third network interface 415. In some embodiments, the third input device 420 is a button or switch configured to be actuated by a user.

In some embodiments, the base station device 145 includes fewer or additional components in configurations different from that illustrated in FIG. 4. For example, the base station device 145 may include a battery, a display or indicator (e.g., a light emitting diode) to provide information to the user, or the like. As another example, the base station device 145 may not include the input device 420 in some embodiments. In some embodiments, the base station device 145 performs functionality other than the functionality described below.

In some embodiments, the satellite 150 and the server 152 include similar elements as the elements described above with respect to the devices 105, 115, and 145 that function in a similar manner. For example, the satellite 150 and the server 152 may each include an electronic processor, a memory, and a network interface, among other elements.

In some embodiments, the robotic mower 105 travels within a virtual boundary of the operating area 155 to execute a task (e.g., mowing a lawn). The robotic mower 105 may travel randomly within the operating area 155 defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area 155 defined by the virtual boundary (e.g., in adjacent rows or columns between sides of the virtual boundary) to more efficiently and evenly mow the lawn within the operating area 155. In such embodiments, the robotic mower 105 may determine and keep track of its current location within the operating area 155.

For example, as indicated in FIGS. 1A and 1B, the robotic mower 105 and the stationary base station device 145 may both be configured to communicate with each other and with one or more satellites 150. In some embodiments, both the robotic mower 105 and the base station device 145 may include an RTK GNSS receiver. During a mowing operation, as the robotic mower 105 moves within the operating area 155, the robotic mower 105 may determine its current location based on a location signal received, via its RTK GNSS receiver, from the one or more satellites 150 and based on calibration information received from the base station device 145 regarding the same location signal received by the RTK GNSS receiver of the stationary base station device 145.

For example, during a mowing operation, the base station device 145 may be stationary (i.e., acting as a stationary base station) while the robotic mower 105 moves within the operating area 155. Both the robotic mower 105 and the base station device 145 may receive one or more location signals from one or more satellites 150. The base station device 145 may determine calibration information regarding the received location signal such as phase information of the location signal received by the base station device 145. The base station device 145 may transmit the calibration information to the robotic mower 105 that received the same one or more location signals from the one or more satellites 150. The robotic mower 105 may then compare the phase information of the location signal received by the base station device 145 with the phase information of the location signal received by the robotic mower 105 to aid the robotic mower 105 in determining the current location of the robotic mower 105 (e.g., using RTK GNSS principles). Accordingly, the stationary base station device 145 provides a reference for the robotic mower 105 to more accurately determine the location of the robotic mower 105 than if the robotic mower 105 determined its location based solely on the location signal received from the one or more satellites 150. More accurately determining the location of the robotic mower 105 allows the robotic mower 105 to better navigate itself within the operating area 155 (e.g., within or along a virtual boundary).

There are a number of existing manners of creating/generating a virtual boundary for a robotic tool. For example, a virtual boundary may be established by manually moving the robotic tool on a desired path (i.e., "dog walking") while the robotic tool stores the desired path. However, this method is not very efficient because the user has to manually move the robotic tool around an operating area. As another example, a virtual boundary may be created automatically by the robotic tool randomly moving on an operating surface and collecting a plurality of trajectories as it randomly moves. However, this method requires complex calculations and may not accurately generate a virtual boundary in many situations such as for a lawn with water areas (e.g., a lake or pond) or other segmented/separated areas. Accordingly, there is a technological problem with respect to creating an accurate virtual boundary for a robotic garden tool in an efficient manner that is not burdensome to the user.

The systems, methods, and devices described herein address the above-noted technological problem by using multiple devices to determine an accurate location of a device that is used to create a virtual boundary. Additionally, the systems, methods, and devices described herein use the robotic garden tool 105 as a stationary base station during virtual boundary creation and use a device that is easier to be moved by a user (e.g., a smart phone 115 or a base station device 145) to create the virtual boundary. For example, the roles/functions of the robotic mower 105 and the base station device 145 during a mowing operation of the robotic mower 105 (e.g., moving robotic mower 105 and stationary base station device 145) may be reversed during creation of the virtual boundary (e.g., moving base station device 145 and stationary robotic mower 105). Embodiments described herein enable more efficient creation of the virtual boundary because, for example, the robotic garden tool 105 does not need to be moved during the creation of the virtual boundary. Rather, a more user-friendly device that is easier for a user to carry and move (e.g., an external device 115 that may include the base station device 145) is moved around the operating area 155 to create the virtual boundary.

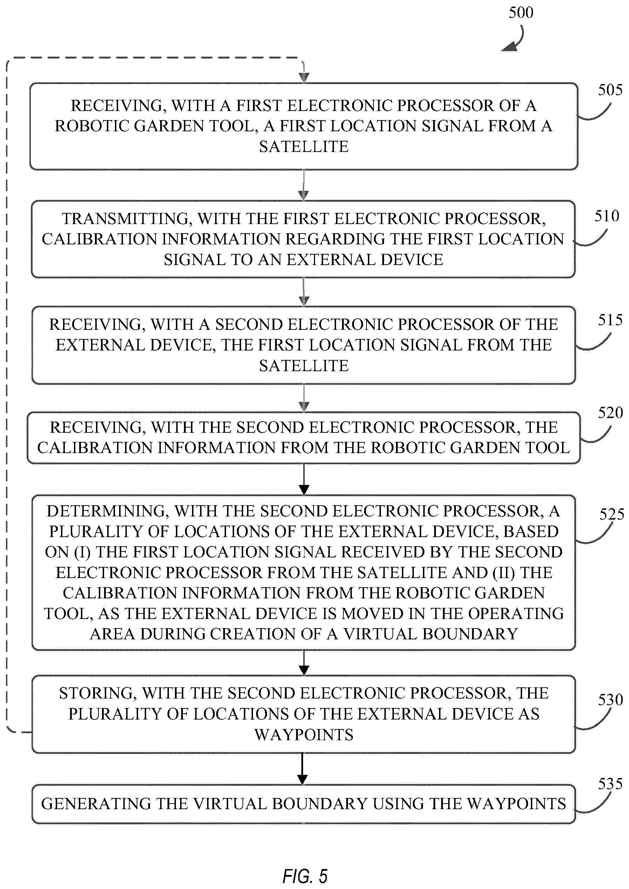

FIG. 5 illustrates a flowchart of a method 500 that may be performed by the first electronic processor 205 of the robotic mower 105 and another electronic processor (e.g., the second electronic processor 305 of the external device 115 or the third electronic processor 405 of the base station device 145) to create a virtual boundary to confine the robotic mower 105. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure. The explanation below refers primarily to the robotic mower 105 and the base station device 145 as the devices that perform steps of the method 500 in order to create the virtual boundary. However, in some embodiments, the external device 115 (e.g., a smart phone 115) may perform the functions of the base station device 145 with respect to creating the virtual boundary (e.g., when the smart phone 115 includes an RTK GNSS receiver). As noted above, the base station device 145 may be considered to be one type of external device 115.

At block 505, the first electronic processor 205 of the robotic mower 105 receives a first location signal from the satellite 150. For example, an RTK GNSS receiver of the first network interface 215 may receive the first location signal and provide the first location signal to the first electronic processor 205. In some embodiments, the first location signal includes a continuous signal transmitted by the satellite 150 for receipt by one or more devices that include an RTK GNSS receiver. In some embodiments, the first location signal includes periodic transmissions of multiple separate signals.

In some embodiments, the first electronic processor 205 uses the first location signal to determine a current location of the robotic mower 105. For example, the first electronic processor 205 may determine the amount of time that it took for the location signal to travel from the satellite 150 to the robotic mower 105. In some embodiments, multiple satellites 150 each transmit a location signal that is received by the robotic mower 105. In such embodiments, the first electronic processor 205 may determine the location of the robotic mower 105 by averaging the results from the multiple location signals from multiple satellites 150. This averaging may increase the reliability of the location determination by the first electronic processor 205, especially when the robotic mower 105 is stationary. In some embodiments, the first electronic processor 205 may determine the location of the robotic mower 105 by additionally or alternatively averaging multiple location signals received from a respective satellite 150 over a time period. This additional or alternative time averaging may increase the reliability of the location determination by the first electronic processor 205, especially when the robotic mower 105 is stationary.

In some embodiments, the first electronic processor 205 determines calibration information regarding the first location signal (or regarding multiple first location signals). The calibration information may include phase information of the first location signal (e.g., a phase of a carrier wave of the first location signal) and a clock signal of the first location signal.

At block 510, the first electronic processor 205 transmits the calibration information regarding the first location signal to the base station device 145. For example, the first electronic processor 205 may transmit the calibration information via a first RF transceiver of the first network interface 215 of the robotic mower 105.

By performing blocks 505 and 510, the robotic mower 105 is performing actions that are typically performed by the base station device 145 during an operation of the robotic mower 105 (e.g., during a mowing operation). However, during performance of blocks 505 and 510, the robotic mower 105 may not be engaged in a mowing operation. Rather, the robotic mower 105 may be configured to remain stationary to act as a first base station with respect to the base station device 145 during creation of a virtual boundary by the base station device 145. Once the virtual boundary is created as explained in further detail below, the robotic mower 105 is configured to be confined by the virtual boundary to remain in the operating area 155 during operation of the robotic mower 105 to mow the lawn.

At block 515, the third electronic processor 405 of the base station device 145 receives the first location signal from the satellite 150. Similar to block 505, an RTK GNSS receiver of the third network interface 415 may receive the first location signal and provide the first location signal to the third electronic processor 405. The first location signal received by the third electronic processor 405 may be the same signal received by the first electronic processor 205 of the robotic mower 105 except there may be a phase difference between the two received location signals based on the difference in location between the base station device 145 and the robotic mower 105.

At block 520, the third electronic processor 405 receives the calibration information from the robotic mower 105 (e.g., via a second RF transceiver of the third network interface 415).

At block 525, the third electronic processor 405 determines a plurality of locations of the base station device 145, based on (i) the first location signal received by the third electronic processor 405 from the satellite 150 and (ii) the calibration information from the robotic mower 105, as the base station device 145 is moved in the operating area 155 during the creation of the virtual boundary. In some embodiments, the third electronic processor 405 is configured to compare first phase information included in the calibration information from the robotic mower 105 to second phase information of the first location signal received by the base station device 145 according to RTK GNSS principles to aid in determining the plurality of locations of the base station device 145.

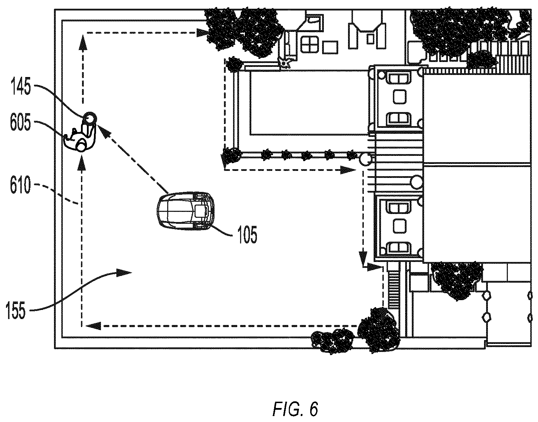

In some embodiments, the base station device 145 is hand held by a user 605 as the user moves along a boundary of the operating area 155 to create the virtual boundary (e.g., see FIG. 6). For example, the base station device 145 may include a pole with a grip area configured to be grasped by the user 605. In FIG. 6, the dashed line around a perimeter of the lawn may represent a virtual boundary 610. The dashed line from the robotic mower 105 to the base station device 145 may represent the transmission of calibration information from the robotic mower 105 to the base station device 145.

At block 530, as the base station device 145 is moved in the operating area 155 by the user 605, the third electronic processor 405 stores the plurality of locations of the base station device 145 as waypoints. For example, the third electronic processor 405 may store waypoint data in the third memory 410 of the base station device 145 and/or may transmit waypoint data to another device for storage (e.g., the robotic mower 105, the server 152, etc.). In some embodiments, the third electronic processor 405 may continuously store locations as waypoints or may periodically store locations as waypoints at predetermined time intervals (e.g., every 100 milliseconds, every 500 milliseconds, every one second, or the like). In some embodiments, the third electronic processor 405 is configured to store a current location of the base station device 145 as one of the waypoints in response to determining that the third input device 420 (e.g., a button on the base station device 145) has been actuated by the user 605. Accordingly, the user 605 may be able to control how many waypoints are stored by the base station device 145 while moving the base station device 145 around the operating area 155.

As indicated by the dashed line from block 530 back to block 505, blocks 505 through 530 may be repeated until all desired waypoints are collected. In some embodiments, the third electronic processor 405 receives a user input from the user 605 via a third input device 420 that indicates that all desired waypoints have been collected. In some embodiments, the waypoints may be analyzed (e.g., by the third electronic processor 405) while they are being collected to determine that the waypoints define an approximately enclosed area. In response to this determination, the third electronic processor 405 may determine that all desired waypoints have been collected.

Once all desired waypoints have been collected, at block 535, the virtual boundary 610 is generated using the waypoints. The server 152, the electronic processor 205, 305, 405 of any device, or a combination thereof may generate the virtual boundary 610 using the waypoints. For example, waypoint data may be transmitted to a smart phone 115, to the robotic mower 105, or to the server 152 such that any combination of these devices may generate the virtual boundary 610. In some embodiments, the third electronic processor 405 of the base station device 145 generates the virtual boundary 610. The virtual boundary 610 may be generated by connecting adjacent waypoints using approximately straight lines to create an enclosed operating area 155. In some embodiments, lines between adjacent waypoints or including multiple waypoints are smoothened using cubic splining. In some embodiments, the device generating the virtual boundary 610 may determine that waypoints are redundant and/or that one or more waypoints are within an enclosed area defined by the remaining waypoints. In response to identifying such waypoints, the device may remove the waypoints from the determination of the generation of the virtual boundary 610. Additionally, the user 605 may selectively remove waypoints as desired. For example, the smart phone 115 may receive the waypoints from the base station device 145 and may display locations of the waypoints on the second display 325. In response to a user input on the second display 325, the smart phone 115 may delete waypoints selected by the user 605.

In some embodiments, the smart phone 115 may provide an extended user interface with respect to the base station device 145 and may control the base station device 145, for example, to enable/disable storing of waypoints. For example, a graphical user interface (GUI) on the second display 325 may display a user-selectable button that enables/disables the base station device 145 to store waypoints. For example, the smart phone 115 may transmit commands to the base station device 145 via an RF transceiver of the second network interface 315 of the smart phone 115. Additionally, the base station device 145 may transmit collected waypoint data to the smart phone 115 for display on the second display 325. In some embodiments, the collected waypoints and/or the virtual boundary 610 may be displayed on the second display 325. In some embodiments, the second electronic processor 305 of the smart phone 115 may receive a user input via the second display 325 that indicates whether certain waypoints and/or portions of the virtual boundary 610 correspond to obstacles within a perimeter virtual boundary 610 around an edge of the operating area 155 or the like.

In some embodiments, the method 500 and/or repeated execution of the method 500 may be repeated to generate more than one virtual boundary. For example, a perimeter virtual boundary 610 may be created at an outer edge of an operating area 155 to define the operating area 155 that the robotic mower 105 should operate within. One or more additional virtual boundaries may be created in a similar manner within the perimeter virtual boundary 610 to, for example, surround objects/areas within the main virtual boundary in which the robotic mower 105 should not operate. For example, such objects/areas may include one or more trees, a swimming pool, a boundary of a garden, flower bed, etc., or the like. As noted above, in some embodiments, the second electronic processor 305 of the smart phone 115 may receive a user input via the second display 325 that indicates whether certain waypoints and/or portions of a virtual boundary (e.g., additional virtual boundaries) correspond to obstacles within a perimeter virtual boundary 610. Additionally or alternatively, the device generating the virtual boundaries may determine that the waypoints of an additional virtual boundary are located within the perimeter virtual boundary 610. In response to this determination and based on an assumption that the user desires to define a "keep-out" zone, the device generating the virtual boundaries may generate the additional virtual boundary such that the robotic mower 105 is configured to stay out of a second area within the additional virtual boundary. In other words, the virtual boundaries may be generated such that the robotic mower 105 stays within the perimeter virtual boundary 610 and outside of the additional virtual boundary. This area between the virtual boundaries where the robotic mower 105 is configured to travel may be referred to as the operating area 155 in some embodiments. In other embodiments, the operating area 155 may include an entire area within the perimeter virtual boundary 610 (e.g., including "keep-out" zones).

Although the above example explains the additional virtual boundary within the perimeter virtual boundary 610 being generated after the perimeter virtual boundary 610 has been generated, in some embodiments, the device generating the virtual boundaries may generally determine whether an area to be mowed by the robotic mower 105 is within or outside a virtual boundary based on a relative relationship of virtual boundaries that have been generated. For example, in contrast to the above example, the additional virtual boundary may be generated before the perimeter virtual boundary 610. In such a situation, the device generating the virtual boundaries may determine that the waypoints of the later-generated perimeter virtual boundary 610 are located outside of the earlier-made additional virtual boundary. In response to this determination and based on an assumption that the user desires to define a "keep-out" zone using the inner set of waypoints, the device generating the virtual boundaries may generate the additional virtual boundary using the inner waypoints and the perimeter virtual boundary 610 using the outer waypoints. In some embodiments, the function/purpose of each set of waypoints may be adjusted/controlled via user input on the smart phone 115 as explained previously herein.

When the virtual boundary 610 is generated by a device besides the robotic mower 105, the device that generated the virtual boundary 610 may transmit information indicative of the virtual boundary 610 to the robotic mower 105. The robotic mower 105 (specifically, the first electronic processor 205) may be configured to use the information indicative of the virtual boundary 610 and a determined current location of the robotic mower 105 to control the robotic mower 105 to remain in the operating area 155 during operation of the robotic mower 105 (e.g., during a mowing operation).

In some embodiments, the base station device 145 is configured to be placed in a stationary manner at a base station location after the creation of the virtual boundary 610 and is configured to remain stationary to act as a second base station with respect to the robotic mower 105 during operation of the robotic mower 105 as the robotic mower 105 moves on the operating surface in the operating area 155. In other words, after the virtual boundary 610 is created by moving the base station device 145 around the operating area 155, the base station device 145 may return to its typical role/functionality of operating as a stationary RTK GNSS base station for the mobile robotic mower 105. In some embodiments, the third electronic processor 405 of the base station device 145 may determine to switch roles/functionality in response to a user input received by the third input device 420 of the base station device 145 and/or in response to receiving a command from another device in the communication system 100. For example, the command may be received from the robotic mower 105 or the smart phone 115 in response to a user input respectively received by the robotic mower 105 or the smart phone 115.

In some embodiments, the third electronic processor 405 of the base station device 145 is configured such that during operation of the robotic mower 105 as the robotic mower 105 moves on the operating surface in the operating area 155 (i.e., after creation of the virtual boundary 610), the third electronic processor 405 may receive a second location signal from the satellite 150. In some embodiments, multiple satellites 150 each transmit a second location signal that is received by the third electronic processor 405. In such embodiments, the third electronic processor 405 may determine the location of the base station device 145 by averaging the results from the multiple second location signals from multiple satellites 150. This averaging may increase the reliability of the location determination by the third electronic processor 405. In some embodiments, the third electronic processor 405 of the base station device 145 may transmit second calibration information regarding the second location signal to the robotic mower 105.

The first electronic processor 205 of the robotic mower 105 may receive the second location signal(s) from one or more satellites 150 and may receive the second calibration information from the base station device 145. The first electronic processor 205 may determine a current location of the robotic mower 105 based on (i) the second location signal received by the first electronic processor 205 from the satellite 150 and (ii) the second calibration information from the base station device 145. The first electronic processor 205 may control operation of the at least one wheel motor 235 to control movement of the robotic mower 105 based on the current location of the robotic mower 105 and the virtual boundary 610. For example, the first electronic processor 205 may control the robotic mower 105 to remain inside the operating area 155 defined by the virtual boundary 610.

The embodiments described above and illustrated in the figures are presented by way of example only and are not intended as a limitation upon the concepts and principles of the present invention. As such, it will be appreciated that various changes in the elements and their configuration and arrangement are possible without departing from the scope of the present invention.

## Claims

1. A robotic garden tool comprising:
a housing (125);
a set of wheels (130) coupled to the housing and configured to rotate to propel the robotic garden tool on an operating surface in an operating area (155);
at least one wheel motor (235) coupled to one or more wheels of the set of wheels, the at least one wheel motor configured to drive rotation of the one or more wheels; and
a first electronic processor (205) configured to
receive a first location signal from a satellite (150), and
transmit calibration information regarding the first location signal to an external device (115);
wherein the robotic garden tool is configured to remain stationary to act as a first real-time kinematic global navigating satellite systems (RTK GNSS) base station with respect to the external device during creation of a virtual boundary by the external device as the external device is moved in the operating area; and
wherein the robotic garden tool is configured to be confined by the virtual boundary to remain in the operating area during operation of the robotic garden tool;
and wherein the calibration information is configured to be used by a second electronic processor (305) of the external device to:
determine a plurality of locations of the external device as the external device is moved in the operating area during the creation of the virtual boundary; and
store the plurality of locations of the external device as waypoints;
wherein the virtual boundary is generated using the waypoints; and
wherein the external device is configured to be hand-held by a user while being moved in the operating area during the creation of the virtual boundary.

2. The robotic garden tool of claim 1,
wherein the robotic garden tool is configured to move on the operating surface in the operating area to perform a task after the creation of the virtual boundary, and wherein the first electronic processor of the robotic garden tool is configured such that during operation of the robotic garden tool as the robotic garden tool moves on the operating surface in the operating area, the first electronic processor:
receives a second location signal from the satellite;
receives second calibration information from the external device, wherein the external device is configured to be placed in a stationary manner at a base station location after the creation of the virtual boundary and is configured to remain stationary to act as a second RTK GNSS base station with respect to the robotic garden tool during operation of the robotic garden tool as the robotic garden tool moves on the operating surface in the operating area;
determines a current location of the robotic garden tool based on (i) the second location signal received by the first electronic processor from the satellite and (ii) the second calibration information from the external device; and
controls operation of the at least one wheel motor to control movement of the robotic garden tool based on the current location of the robotic garden tool and the virtual boundary.

3. The robotic garden tool of any of claims 1 - 2,
wherein the first electronic processor is configured to receive the first location signal via a first RTK GNSS receiver of the robotic garden tool; and
wherein the first electronic processor is configured to transmit the calibration information via a first radio frequency transceiver of the robotic garden tool;

4. The robotic garden tool of any of claims 1 - 3,
wherein the first electronic processor is configured to receive the first location signal via a first global positioning system (GPS) receiver of the robotic garden tool;
wherein a second electronic processor of the external device is configured to receive the first location signal from the satellite via a second GPS receiver of the external device; and
wherein the first GPS receiver and the second GPS receiver are different types of GPS receivers such that one of the first GPS receiver and the second GPS receiver allows for more accurate positioning determinations than the other;

5. The robotic garden tool of any of claims 1 - 4,
wherein the calibration information includes first phase information of the first location signal received by the robotic garden tool; and
wherein a second electronic processor of the external device is configured to compare the first phase information to second phase information of the first location signal received by the external device to aid in determining a location of the external device.

6. A method of creating a virtual boundary, the method comprising:
receiving, with a first electronic processor of a robotic garden tool, a first location signal from a satellite (505), wherein the robotic garden tool includes
a housing,
a set of wheels coupled to the housing and configured to rotate to propel the robotic garden tool on an operating surface in an operating area, and
at least one wheel motor coupled to one or more wheels of the set of wheels, the at least one wheel motor configured to drive rotation of the one or more wheels; and
transmitting, with the first electronic processor, calibration information regarding the first location signal to an external device (510),
wherein the robotic garden tool is configured to remain stationary to act as a first base station with respect to the external device during creation of the virtual boundary by the external device, and
wherein the robotic garden tool is configured to be confined by the virtual boundary to remain in the operating area during operation of the robotic garden tool; and
receiving, with a second electronic processor of the external device, the first location signal from the satellite (515);
receiving, with the second electronic processor, the calibration information from the robotic garden tool (520);
determining, with the second electronic processor, a plurality of locations of the external device, based on (i) the first location signal received by the second electronic processor from the satellite and (ii) the calibration information from the robotic garden tool, as the external device is moved in the operating area during the creation of the virtual boundary (525);
storing, with the second electronic processor, the plurality of locations of the external device as waypoints (530); and
generating the virtual boundary using the waypoints (535);
wherein the external device is configured to be hand-held by a user while being moved in the operating area during the creation of the virtual boundary.

7. The method of claim 6, further comprising after the creation of the virtual boundary, placing the external device in a stationary manner at a base station location, wherein the external device is configured to remain stationary to act as a second base station with respect to the robotic garden tool during operation of the robotic garden tool as the robotic garden tool moves on the operating surface in the operating area.

8. The method of claim 7, further comprising during operation of the robotic garden tool as the robotic garden tool moves on the operating surface in the operating area:
receiving, with the second electronic processor of the external device, a second location signal from the satellite;
transmitting, with the second electronic processor, second calibration information regarding the second location signal to the robotic garden tool;
receiving, with the first electronic processor of the robotic garden tool, the second location signal from the satellite;
receiving, with the first electronic processor, the second calibration information from the external device;
determining, with the first electronic processor, a current location of the robotic garden tool based on (i) the second location signal received by the first electronic processor from the satellite and (ii) the second calibration information from the external device; and
controlling, with the first electronic processor, operation of the at least one wheel motor to control movement of the robotic garden tool based on the current location of the robotic garden tool and the virtual boundary.

9. The method of claim 6, wherein receiving, with the first electronic processor of the robotic garden tool, the first location signal includes receiving the first location signal via a first real-time kinematic global navigating satellite systems (RTK GNSS) receiver of the robotic garden tool;
wherein transmitting the calibration information includes transmitting the calibration information via a first radio frequency transceiver of the robotic garden tool;
wherein receiving, with the second electronic processor of the external device, the first location includes receiving the first location signal via a second RTK GNSS receiver of the external device; and
wherein receiving the calibration information includes receiving the calibration information via a second radio frequency transceiver of the external device.

10. The method of claim 6, wherein receiving, with the first electronic processor of the robotic garden tool, the first location signal includes receiving the first location signal via a first global positioning system (GPS) receiver of the robotic garden tool;
wherein receiving, with the second electronic processor of the external device, the first location includes receiving the first location signal via a second GPS receiver of the external device; and
wherein the first GPS receiver and the second GPS receiver are different types of GPS receivers such that one of the first GPS receiver and the second GPS receiver allows for more accurate positioning determinations than the other.

11. The method of claim 6, wherein the calibration information includes first phase information of the first location signal received by the robotic garden tool, and further comprising:
comparing, with the second electronic processor of the external device, the first phase information to second phase information of the first location signal received by the external device to aid in determining the plurality of locations of the external device.

12. The method of claim 6, further comprising:
determining, with the second electronic processor of the external device, that a user input device of the external device has been actuated by the user; and
in response to determining that the user input device has been actuated, storing a current location of the external device as one of the waypoints.

## Patentansprüche

1. Roboter-Gartengerät, umfassend:
ein Gehäuse (125);
einen Satz Räder (130), die mit dem Gehäuse verbunden und dazu ausgelegt sind, sich zu drehen, um das Roboter-Gartengerät auf einer Arbeitsfläche in einem Arbeitsbereich (155) anzutreiben;
zumindest einen Radmotor (235), der mit einem oder mehreren Rädern des Satzes von Rädern verbunden ist, wobei der zumindest eine Radmotor dazu ausgelegt ist, die Drehung des einen oder der mehreren Räder zu bewirken; und
einen ersten elektronischen Prozessor (205), der ausgelegt ist zum
Empfangen eines ersten Ortungssignals von einem Satelliten (150) und
Übertragen von Kalibrierungsinformationen bezüglich des ersten Ortungssignals an eine externe Vorrichtung (115);
wobei das Roboter-Gartengerät dazu ausgelegt ist, stationär zu verbleiben, um als eine erste Echtzeit-Kinematik-GNSS-Basisstation (RTK GNSS) in Bezug auf die externe Vorrichtung zu fungieren, während von der externen Vorrichtung eine virtuelle Grenze erstellt wird, wenn die externe Vorrichtung im Arbeitsbereich bewegt wird; und
wobei das Roboter-Gartengerät dazu ausgelegt ist, durch die virtuelle Grenze eingegrenzt zu werden, um während des Betriebs des Roboter-Gartengeräts im Arbeitsbereich zu bleiben;
und wobei die Kalibrierungsinformationen dazu ausgelegt sind, von einem zweiten elektronischen Prozessor (305) der externen Vorrichtung verwendet zu werden zum
Bestimmen einer Vielzahl von Standorten der externen Vorrichtung, wenn die externe Vorrichtung bei der Erstellung der virtuellen Grenze im Arbeitsbereich bewegt wird; und Abspeichern der Vielzahl von Standorten der externen Vorrichtung als Wegpunkte;
wobei die virtuelle Grenze unter Verwendung der Wegpunkte erzeugt wird; und
wobei die externe Vorrichtung dazu ausgelegt ist, von einem Benutzer in der Hand gehalten zu werden, wenn sie bei der Erstellung der virtuellen Grenze im Arbeitsbereich bewegt wird.

2. Roboter-Gartengerät nach Anspruch 1,
wobei das Roboter-Gartengerät dazu ausgelegt ist, sich auf der Arbeitsfläche im Arbeitsbereich zu bewegen, um nach der Erstellung der virtuellen Grenze eine Aufgabe auszuführen, und
wobei der erste elektronische Prozessor des Roboter-Gartengeräts so ausgelegt ist, dass während des Betriebs des Roboter-Gartengeräts, wenn sich das Roboter-Gartengerät auf der Arbeitsfläche im Arbeitsbereich bewegt, der erste elektronische Prozessor
ein zweites Ortungssignal vom Satelliten empfängt;
zweite Kalibrierungsinformationen von der externen Vorrichtung empfängt, wobei die externe Vorrichtung dazu ausgelegt ist, nach der Erstellung der virtuellen Grenze stationär an einem Basisstationsstandort platziert zu werden, und dazu ausgelegt ist, stationär zu verbleiben, um während des Betriebs des Roboter-Gartengeräts, wenn sich das Roboter-Gartengerät auf der Arbeitsfläche im Arbeitsbereich bewegt, als zweite RTK-GNSS-Basisstation in Bezug auf das Roboter-Gartengerät zu fungieren; einen aktuellen Standort des Roboter-Gartengeräts bestimmt, und zwar auf der Grundlage von (i) dem durch den ersten elektronischen Prozessor vom Satelliten empfangenen zweiten Ortungssignals und (ii) den zweiten Kalibrierungsinformationen von der externen Vorrichtung; und
den Betrieb des zumindest einen Radmotors steuert, um die Bewegung des Roboter-Gartengeräts auf der Grundlage des aktuellen Standorts des Roboter-Gartengeräts und der virtuellen Grenze zu steuern.

3. Roboter-Gartengerät nach einem der Ansprüche 1 bis 2,
wobei der erste elektronische Prozessor dazu ausgelegt ist, das erste Ortungssignal über einen ersten RTK-GNSS-Empfänger des Roboter-Gartengeräts zu empfangen; und
wobei der erste elektronische Prozessor dazu ausgelegt ist, die Kalibrierungsinformationen über einen ersten Funkfrequenz-Transceiver des Roboter-Gartengeräts zu übertragen.

4. Roboter-Gartengerät nach einem der Ansprüche 1 bis 3,
wobei der erste elektronische Prozessor dazu ausgelegt ist, das erste Ortungssignal über einen ersten GPS-Empfänger (Global Positioning System) des Roboter-Gartengeräts zu empfangen;
wobei ein zweiter elektronischer Prozessor der externen Vorrichtung dazu ausgelegt ist, das erste Ortungssignal vom Satelliten über einen zweiten GPS-Empfänger der externen Vorrichtung zu empfangen; und wobei der erste GPS-Empfänger und der zweite GPS-Empfänger unterschiedliche Arten von GPS-Empfängern sind, sodass einer aus erstem GPS-Empfänger und zweitem GPS-Empfänger eine genauere Positionsbestimmung ermöglicht als der andere.

5. Roboter-Gartengerät nach einem der Ansprüche 1 bis 4,
wobei die Kalibrierungsinformationen erste Phaseninformationen des ersten Ortungssignals umfassen, das vom Roboter-Gartengerät empfangen wird; und
wobei ein zweiter elektronischer Prozessor der externen Vorrichtung dazu ausgelegt ist, die ersten Phaseninformationen mit zweiten Phaseninformationen des ersten Ortungssignals zu vergleichen, das von der externen Vorrichtung empfangen wird, um die Bestimmung eines Standortes der externen Vorrichtung zu unterstützen.

6. Verfahren zum Erstellen einer virtuellen Grenze, wobei das Verfahren umfasst:
Empfangen (505) eines ersten Ortungssignals von einem Satelliten mittels eines ersten elektronischen Prozessors eines Roboter-Gartengeräts, wobei das Roboter-Gartengerät umfasst:
ein Gehäuse,
einen Satz Räder, die mit dem Gehäuse verbunden und dazu ausgelegt sind, sich zu drehen, um das Roboter-Gartengerät auf einer Arbeitsfläche in einem Arbeitsbereich anzutreiben, und
zumindest einen Radmotor, der mit einem oder mehreren Rädern des Satzes von Rädern verbunden ist, wobei der zumindest eine Radmotor dazu ausgelegt ist, die Drehung des einen oder der mehreren Räder zu bewirken; und
Übertragen (510) von Kalibrierungsinformationen bezüglich des ersten Ortungssignals an eine externe Vorrichtung mittels des ersten elektronischen Prozessors,
wobei das Roboter-Gartengerät dazu ausgelegt ist, stationär zu verbleiben, um während der Erstellung der virtuellen Grenze durch die externe Vorrichtung als erste Basisstation in Bezug auf die externe Vorrichtung zu fungieren, und
wobei das Roboter-Gartengerät dazu ausgelegt ist, durch die virtuelle Grenze eingegrenzt zu werden, um während des Betriebs des Roboter-Gartengeräts im Arbeitsbereich zu bleiben; und
Empfangen (515) des ersten Ortungssignals vom Satelliten mittels eines zweiten elektronischen Prozessors der externen Vorrichtung;
Empfangen (520) der Kalibrierungsinformationen vom Roboter-Gartengerät mittels des zweiten elektronischen Prozessors;
Bestimmen (525) einer Vielzahl von Standorten der externen Vorrichtung mittels des zweiten elektronischen Prozessors, und zwar auf der Grundlage von (i) dem durch den zweiten elektronischen Prozessor vom Satelliten empfangenen ersten Ortungssignals und (ii) den Kalibrierungsinformationen vom Roboter-Gartengerät, wenn die externe Vorrichtung bei der Erstellung der virtuellen Grenze im Arbeitsbereich bewegt wird;
Abspeichern (530) der Vielzahl von Standorten der externen Vorrichtung als Wegpunkte mittels des zweiten elektronischen Prozessors; und
Erzeugen (535) der virtuellen Grenze unter Verwendung der Wegpunkte;
wobei die externe Vorrichtung dazu ausgelegt ist, von einem Benutzer in der Hand gehalten zu werden, wenn sie bei der Erstellung der virtuellen Grenze im Arbeitsbereich bewegt wird.

7. Verfahren nach Anspruch 6,
ferner umfassend nach der Erstellung der virtuellen Grenze das Platzieren der externen Vorrichtung stationär an einem Basisstationsstandort, wobei die externe Vorrichtung dazu ausgelegt ist, stationär zu verbleiben, um während des Betriebs des Roboter-Gartengeräts als zweite Basisstation in Bezug auf das Roboter-Gartengerät zu fungieren, wenn sich das Roboter-Gartengerät auf der Arbeitsfläche im Arbeitsbereich bewegt.

8. Verfahren nach Anspruch 7,
ferner umfassend während des Betriebs des Roboter-Gartengeräts, wenn sich das Roboter-Gartengerät auf der Arbeitsfläche im Arbeitsbereich bewegt:
Empfangen eines zweiten Ortungssignals vom Satelliten mittels des zweiten elektronischen Prozessors der externen Vorrichtung;
Übertragen von zweiten Kalibrierungsinformationen bezüglich des zweiten Ortungssignals an das Roboter-Gartengerät mittels des zweiten elektronischen Prozessors;
Empfangen des zweiten Ortungssignals vom Satelliten mittels des ersten elektronischen Prozessors des Roboter-Gartengeräts;
Empfangen der zweiten Kalibrierungsinformationen von der externen Vorrichtung mittels des ersten elektronischen Prozessors;
Bestimmen eines aktuellen Standorts des Roboter-Gartengeräts mittels des ersten elektronischen Prozessors, und zwar auf der Grundlage von (i) dem durch den ersten elektronischen Prozessor vom Satelliten empfangenen zweiten Ortungssignals und (ii) den zweiten Kalibrierungsinformationen von der externen Vorrichtung; und
Steuern des Betriebs des zumindest einen Radmotors mittels des ersten elektronischen Prozessors, um die Bewegung des Roboter-Gartengeräts auf der Grundlage des aktuellen Standorts des Roboter-Gartengeräts und der virtuellen Grenze zu steuern.

9. Verfahren nach Anspruch 6,
wobei das Empfangen des ersten Ortungssignals mittels des ersten elektronischen Prozessors des Roboter-Gartengeräts das Empfangen des ersten Ortungssignals über einen ersten Echtzeit-Kinematik-GNSS-Empfänger (RTK GNSS) des Roboter-Gartengeräts umfasst;
wobei das Übertragen der Kalibrierungsinformationen das Übertragen der Kalibrierungsinformationen über einen ersten Funkfrequenz-Transceiver des Roboter-Gartengeräts umfasst;
wobei das Empfangen des ersten Standorts mittels des zweiten elektronischen Prozessors der externen Vorrichtung das Empfangen des ersten Ortungssignals über einen zweiten RTK-GNSS-Empfänger der externen Vorrichtung umfasst; und
wobei das Empfangen der Kalibrierungsinformationen das Empfangen der Kalibrierungsinformationen über einen zweiten Funkfrequenz-Transceiver der externen Vorrichtung umfasst.

10. Verfahren nach Anspruch 6,
wobei das Empfangen des ersten Ortungssignals mittels des ersten elektronischen Prozessors des Roboter-Gartengeräts das Empfangen des ersten Ortungssignals über einen ersten GPS-Empfänger (Global Positioning System) des Roboter-Gartengeräts umfasst;
wobei das Empfangen des ersten Standorts mittels des zweiten elektronischen Prozessors der externen Vorrichtung das Empfangen des ersten Ortungssignals über einen zweiten GPS-Empfänger der externen Vorrichtung umfasst; und
wobei der erste GPS-Empfänger und der zweite GPS-Empfänger unterschiedliche Arten von GPS-Empfängern sind, sodass einer aus erstem GPS-Empfänger und zweitem GPS-Empfänger genauere Positionsbestimmungen ermöglicht als der andere.

11. Verfahren nach Anspruch 6,
wobei die Kalibrierungsinformationen erste Phaseninformationen des ersten Ortungssignals umfassen, das vom Roboter-Gartengerät empfangen wird, und ferner umfassend:
Vergleichen der ersten Phaseninformationen mit zweiten Phaseninformationen des ersten Ortungssignals, das von der externen Vorrichtung empfangen wird, mittels des zweiten elektronischen Prozessors der externen Vorrichtung, um die Bestimmung der Vielzahl von Standorten der externen Vorrichtung zu unterstützen.

12. Verfahren nach Anspruch 6, ferner umfassend:
Bestimmen mittels des zweiten elektronischen Prozessors der externen Vorrichtung, dass eine Benutzereingabeeinrichtung der externen Vorrichtung vom Benutzer betätigt wurde; und
als Reaktion auf die Bestimmung, dass die Benutzereingabeeinrichtung betätigt wurde, Abspeichern eines aktuellen Standorts der externen Vorrichtung als einen der Wegpunkte.

## Revendications

1. Outil de jardinage robotisé comprenant :
un boîtier (125) ;
un ensemble de roues (130) couplées au boîtier et conçues pour tourner afin de propulser l'outil de jardinage robotisé sur une surface de travail dans une zone de travail (155) ;
au moins un moteur de roue (235) couplé à une ou plusieurs roues de l'ensemble de roues, ledit au moins un moteur de roue étant conçu pour entraîner la rotation de la ou des roues ; et
un premier processeur électronique (205) conçu pour
recevoir un premier signal de localisation provenant d'un satellite (150), et
transmettre des informations d'étalonnage concernant le premier signal de localisation à un dispositif externe (115) ;
sachant que l'outil de jardinage robotisé est conçu pour rester stationnaire afin d'agir comme une première station de base cinématique en temps réel du système mondial de navigation par satellite (RTK GNSS) par rapport au dispositif externe pendant la création d'une limite virtuelle par le dispositif externe lorsque le dispositif externe est déplacé dans la zone de travail ; et
l'outil de jardinage robotisé est conçu pour être confiné par la limite virtuelle afin de rester dans la zone de travail pendant le fonctionnement de l'outil de jardinage robotisé ;
et les informations d'étalonnage sont conçues pour être utilisées par un deuxième processeur électronique (305) du dispositif externe afin de :
déterminer une pluralité d'emplacements du dispositif externe lorsque le dispositif externe est déplacé dans la zone de travail pendant la création de la limite virtuelle ; et
stocker la pluralité d'emplacements du dispositif externe en tant que points de cheminement ;
sachant que la limite virtuelle est générée en utilisant les points de cheminement ; et
le dispositif externe est conçu pour être tenu à la main par un utilisateur lorsqu'il est déplacé dans la zone de travail pendant la création de la limite virtuelle.

2. Outil de jardinage robotisé selon la revendication 1,
dans lequel l'outil de jardinage robotisé est conçu pour se déplacer sur la surface de travail dans la zone de travail afin d'effectuer une tâche après la création de la limite virtuelle, et
le premier processeur électronique de l'outil de jardinage robotisé est conçu de telle sorte que pendant le fonctionnement de l'outil de jardinage robotisé, lorsque l'outil de jardinage robotisé se déplace sur la surface de travail dans la zone de travail, le premier processeur électronique
reçoit un deuxième signal de localisation provenant du satellite ; reçoit des deuxièmes informations d'étalonnage provenant du dispositif externe, sachant que le dispositif externe est conçu pour être placé de manière stationnaire à un emplacement de station de base après la création de la limite virtuelle et est conçu pour rester stationnaire afin d'agir comme une deuxième station de base RTK GNSS par rapport à l'outil de jardinage robotisé pendant le fonctionnement de l'outil de jardinage robotisé, lorsque l'outil de jardinage robotisé se déplace sur la surface de travail dans la zone de travail ;
détermine un emplacement actuel de l'outil de jardinage robotisé en se basant sur (i) le deuxième signal de localisation reçu par le premier processeur électronique en provenance du satellite et (ii) les deuxièmes informations d'étalonnage provenant du dispositif externe ; et
commande le fonctionnement dudit au moins un moteur de roue afin de commander le mouvement de l'outil de jardinage robotisé en se basant sur l'emplacement actuel de l'outil de jardinage robotisé et sur la limite virtuelle.

3. Outil de jardinage robotisé selon l'une des revendications 1 à 2, dans lequel le premier processeur électronique est conçu pour recevoir le premier signal de localisation via un premier récepteur RTK GNSS de l'outil de jardinage robotisé ; et
le premier processeur électronique est conçu pour transmettre les informations d'étalonnage via un premier émetteur-récepteur radiofréquence de l'outil de jardinage robotisé.

4. Outil de jardinage robotisé selon l'une des revendications 1 à 3, dans lequel le premier processeur électronique est conçu pour recevoir le premier signal de localisation via un premier récepteur GPS (système de positionnement global) de l'outil de jardinage robotisé ;
un deuxième processeur électronique du dispositif externe est conçu pour recevoir le premier signal de localisation provenant du satellite via un deuxième récepteur GPS du dispositif externe ; et
le premier récepteur GPS et le deuxième récepteur GPS sont différents types de récepteurs GPS, de sorte que l'un parmi le premier récepteur GPS et le deuxième récepteur GPS permet des déterminations de positionnement plus précises que l'autre.

5. Outil de jardinage robotisé selon l'une des revendications 1 à 4,
dans lequel les informations d'étalonnage comprennent des premières informations de phase du premier signal de localisation reçu par l'outil de jardinage robotisé ; et
un deuxième processeur électronique du dispositif externe est conçu pour comparer les premières informations de phase à des deuxièmes informations de phase du premier signal de localisation reçu par le dispositif externe afin d'aider à déterminer l'emplacement du dispositif externe.

6. Procédé de création d'une limite virtuelle, le procédé consistant à :
recevoir (505), à l'aide d'un premier processeur électronique d'un outil de jardinage robotisé, un premier signal de localisation provenant d'un satellite, l'outil de jardinage robotisé comprenant
un boîtier,
un ensemble de roues couplées au boîtier et conçues pour tourner afin de propulser l'outil de jardinage robotisé sur une surface de travail dans une zone de travail, et
au moins un moteur de roue couplé à une ou plusieurs roues de l'ensemble de roues, ledit au moins un moteur de roue étant conçu pour entraîner la rotation de la ou des roues ; et
transmettre (510), à l'aide du premier processeur électronique, des informations d'étalonnage concernant le premier signal de localisation à un dispositif externe,
sachant que l'outil de jardinage robotisé est conçu pour rester stationnaire afin d'agir comme une première station de base par rapport au dispositif externe pendant la création de la limite virtuelle par le dispositif externe, et
l'outil de jardinage robotisé est conçu pour être confiné par la limite virtuelle afin de rester dans la zone de travail pendant le fonctionnement de l'outil de jardinage robotisé ; et
recevoir (515), à l'aide d'un deuxième processeur électronique du dispositif externe, le premier signal de localisation provenant du satellite ;
recevoir (520), à l'aide du deuxième processeur électronique, les informations d'étalonnage provenant de l'outil de jardinage robotisé ;
déterminer (525), à l'aide du deuxième processeur électronique, une pluralité d'emplacements du dispositif externe en se basant sur (i) le premier signal de localisation reçu par le deuxième processeur électronique en provenance du satellite et (ii) les informations d'étalonnage provenant de l'outil de jardinage robotisé, lorsque le dispositif externe est déplacé dans la zone de travail pendant la création de la limite virtuelle ;
stocker (530), à l'aide du deuxième processeur électronique, la pluralité d'emplacements du dispositif externe en tant que points de cheminement ; et
générer (535) la limite virtuelle en utilisant les points de cheminement ;
sachant que le dispositif externe est conçu pour être tenu à la main par un utilisateur lorsqu'il est déplacé dans la zone de travail pendant la création de la limite virtuelle.

7. Procédé selon la revendication 6, consistant en outre, après la création de la limite virtuelle, à placer le dispositif externe de manière stationnaire à un emplacement de station de base, le dispositif externe étant conçu pour rester stationnaire afin d'agir comme une deuxième station de base par rapport à l'outil de jardinage robotisé pendant le fonctionnement de l'outil de jardinage robotisé lorsque l'outil de jardinage robotisé se déplace sur la surface de travail dans la zone de travail.

8. Procédé selon la revendication 7, consistant en outre, pendant le fonctionnement de l'outil de jardinage robotisé, lorsque l'outil de jardinage robotisé se déplace sur la surface de travail dans la zone de travail, à :
recevoir, à l'aide du deuxième processeur électronique du dispositif externe, un deuxième signal de localisation provenant du satellite ;
transmettre, à l'aide du deuxième processeur électronique, des deuxièmes informations d'étalonnage concernant le deuxième signal de localisation à l'outil de jardinage robotisé ;
recevoir, à l'aide du premier processeur électronique de l'outil de jardinage robotisé, le deuxième signal de localisation provenant du satellite ;
recevoir, à l'aide du premier processeur électronique, les deuxièmes informations d'étalonnage provenant du dispositif externe ;
déterminer, à l'aide du premier processeur électronique, un emplacement actuel de l'outil de jardinage robotisé en se basant sur (i) le deuxième signal de localisation reçu par le premier processeur électronique en provenance du satellite et (ii) les deuxièmes informations d'étalonnage provenant du dispositif externe ; et
commander, à l'aide du premier processeur électronique, le fonctionnement dudit au moins un moteur de roue afin de commander le mouvement de l'outil de jardinage robotisé en se basant sur l'emplacement actuel de l'outil de jardinage robotisé et sur la limite virtuelle.

9. Procédé selon la revendication 6,
dans lequel la réception, à l'aide du premier processeur électronique de l'outil de jardinage robotisé, du premier signal de localisation comprend la réception du premier signal de localisation via un premier récepteur cinématique en temps réel du système mondial de navigation par satellite (RTK GNSS) de l'outil de jardinage robotisé ;
la transmission des informations d'étalonnage comprend la transmission des informations d'étalonnage via un premier émetteur-récepteur radiofréquence de l'outil de jardinage robotisé ;
la réception, à l'aide du deuxième processeur électronique du dispositif externe, du premier emplacement comprend la réception du premier signal de localisation via un deuxième récepteur RTK GNSS du dispositif externe ; et
la réception des informations d'étalonnage comprend la réception des informations d'étalonnage via un deuxième émetteur-récepteur radiofréquence du dispositif externe.

10. Procédé selon la revendication 6,
dans lequel la réception, à l'aide du premier processeur électronique de l'outil de jardinage robotisé, du premier signal de localisation comprend la réception du premier signal de localisation via un premier récepteur GPS (système de positionnement global) de l'outil de jardinage robotisé ; la réception, à l'aide du deuxième processeur électronique du dispositif externe, du premier emplacement comprend la réception du premier signal de localisation via un deuxième récepteur GPS du dispositif externe ; et
le premier récepteur GPS et le deuxième récepteur GPS sont des types différents de récepteurs GPS, de telle sorte que l'un parmi le premier récepteur GPS et le deuxième récepteur GPS permet des déterminations de positionnement plus précises que l'autre.

11. Procédé selon la revendication 6,
dans lequel les informations d'étalonnage comprennent des premières informations de phase du premier signal de localisation reçu par l'outil de jardinage robotisé, et consistant en outre à :
comparer, à l'aide du deuxième processeur électronique du dispositif externe, les premières informations de phase à des deuxièmes informations de phase du premier signal de localisation reçu par le dispositif externe afin d'aider à déterminer la pluralité d'emplacements du dispositif externe.

12. Procédé selon la revendication 6, consistant en outre à :
déterminer, à l'aide du deuxième processeur électronique du dispositif externe, le fait qu'un dispositif d'entrée utilisateur du dispositif externe a été actionné par l'utilisateur ; et
en réponse à la détermination du fait que le dispositif d'entrée utilisateur a été actionné, stocker un emplacement actuel du dispositif externe comme l'un des points de cheminement.
